# EUROPEAN PATENT APPLICATION

(11) **EP 1 985 212 A1**
(43) Date of publication of application: **29.10.2008**
(21) Application number: 07380115.1
(22) Date of filing: 25.04.2007
(51) Int. Cl.: A47J 27/09

(54) **Pressure indicating and control valve**

(71) Applicant: Compania de Menaje Domestico SL, 48160 Derio (Vizcaya) (ES)
(72) Inventor: Antunano Cantero, Luis, 48160 Derio (ES); Garcia Susinos, Roberto, 48003 Bilbao (ES)
(74) Representative: Carvajal y Urquijo, Isabel

(57) **Abstract**

The invention relates to a pressure regulating valve (1) for a container under pressure of the type including an indicating element (2) for indicating the pressure existing inside said container in which said indicating element (2) is joined to an element of a subassembly (5), said subassembly moving with respect to a guide (9) integrated in a fixed element (8), which guide has an opening (10) for its removal, the elements of said subassembly having the capability of relative movement against the action of a spring (6).

## Description

### Object of the Invention

The object of the present invention relates to a valve for containers under pressure with a built-in pressure indicating element, linked to the body of the valve and which can be easily disassembled for its cleaning and maintenance.

### Background of the Invention

There are several documents with valves and devices with an object similar to that of the present invention. Such documents include European patent EP 1295552. The following differences are observed with respect to the reference document:
- There is no means for measuring the internal pressure in this document.
- The mentioned document mentions a chimney with an axially moving cam. Nevertheless, the constitution of the device is different, in the present document the movement of the cam is not free, the cam being pressed against the lid of the cooker.

Document EP 1008320 describes a device based on the use of a diaphragm which, controlled by the internal steam pressure, axially activates elements which are part of the means for visible internal pressure indication. No process for quickly disassembling the element to clean it is provided.

Document EP 1698814 specifically describes a "vessel"-shaped device, essentially the body of the valve, with a series of holes and an axial spring in the axis of the discharge duct. Elements for measuring the internal pressure are not mentioned.

Document ES 2049148 claims the use of a membrane which, as indicated by the document, is made of silicone and surrounds the axially moving indicating body.

### Description of the Invention

The pressure indicating and control valve, object of the present invention is set forth to palliate the aforementioned problems.

It is a pressure regulating valve for regulating the pressure in containers under pressure, the design of which valve integrates an indicating element for indicating said pressure on said container, the indicating element moving against the action of the pressure against a mechanical system opposing its movement and integral with a subassembly which can be easily removed due to the design of the fixed element on which it is assembled, also having the feature of allowing depressurization by means of releasing steam through the movement of the sealing element to a position opening the steam outlet duct by means of a second cam.

The valve object of the invention is adapted for its assembly on a container under pressure requiring the indication of the pressure existing inside said container under pressure for a user/operator in a mechanical manner and therefore in a manner which is not susceptible to electric failures; being such that it further allows a simple maintenance and cleaning, thereby conferring a high reliability to said element under pressure.

### Brief Description of the Drawings

A series of drawings is very briefly described below which aid in better understanding the invention and which are expressly related to an embodiment of said invention which is set forth as a non-limiting example thereof.

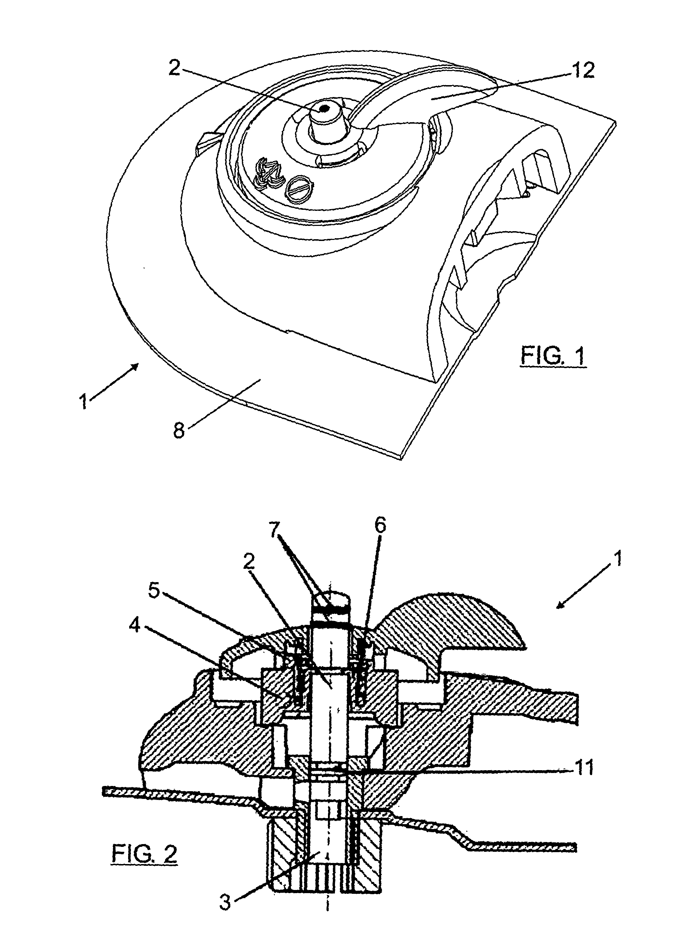

- Figure 1 shows a perspective view of the pressure regulating valve.
- Figure 2 shows a sectional view of the pressure regulating valve.

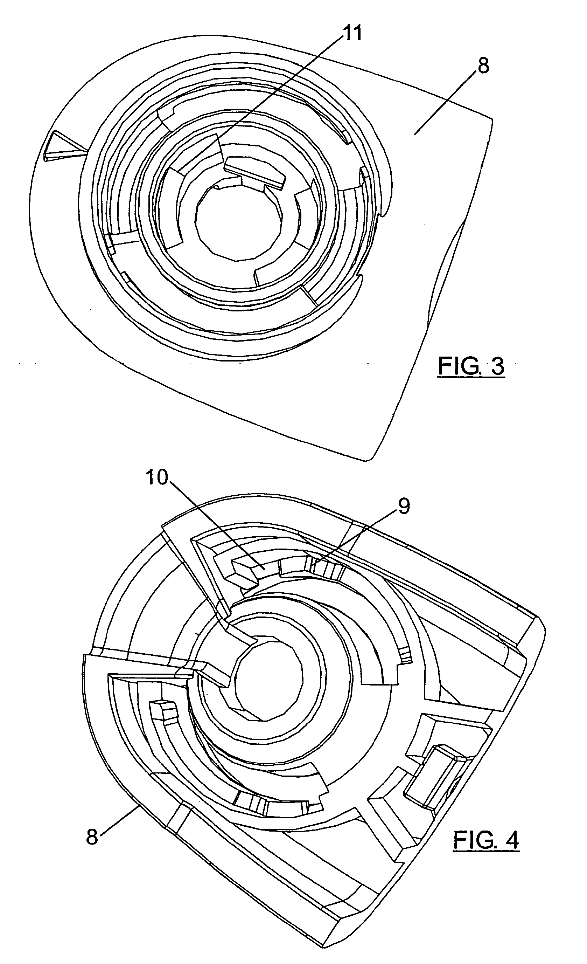

- Figure 3 shows the upper view of the figure of the fixed element allowing the simple disassembly of the valve.
- Figure 4 shows the lower view of the fixed element allowing the depressurization of the container under pressure by means of actuating the pressure indicating element.

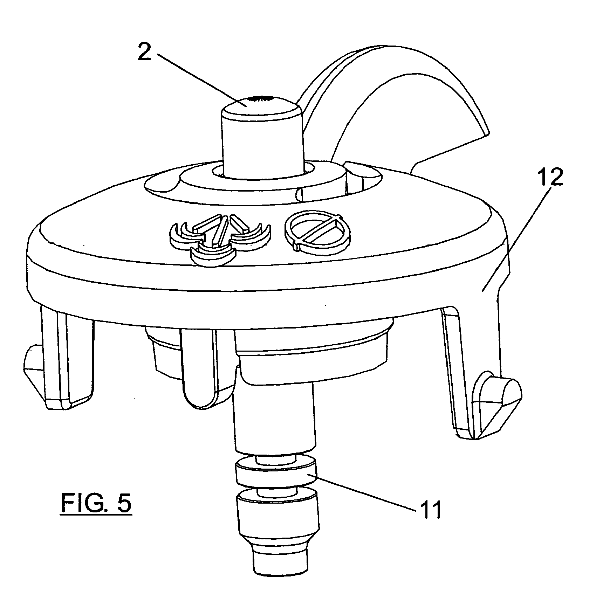

- Figure 5 shows a perspective view of the regulating valve without the fixed element.

### Preferred Embodiment of the Invention

As can be seen in the attached figures, the control valve (1) comprises at least:
- one indicating element (2) comprising in turn:
   o a plurality of graduated marks (7);
- one outlet duct (3);
- one subassembly (5) comprising in turn:
   o a part (4);
   o a spring (6);
- one fixed element (8) comprising in turn:
   o a plurality of grooves (11);
   o a guide (9);
   o an opening (10);
in which the indicating element (2) embedded in the outlet duct (3) moves under the action of the pressure existing inside the container; and in which said indicating element (2) is integral with a part (4) forming part of the subassembly (5), against the action of a spring (6); said spring (6) being inside said subassembly (5), the movement of which, upon reaching the regulated pressure, allows the passage of the pressure generating fluid to the outside, its movement being such that the existing pressure level is indicated by means of graduated marks (7) in said indicating element (2) and the subassembly (5) being such that it allows its assembly and disassembly by means of the grooves (11) of the fixed element (8) for maintenance, as well as the movement of the indicating element (2) sealing the outlet duct (3).

The assembly is carried out according to the following sequence:

The part (4) is first fitted on the indicating element (2); the spring (6) is then inserted between the part (4) and the indicating element (2), inserting the cover (12) on this assembly and setting it on the fixed element (8). The disassembly sequence is the reverse of the assembly sequence.

## Claims

1. A pressure regulating valve (1) for a container under pressure of the type including an indicating element (2) for indicating the pressure existing inside said container **characterized in that** said indicating element (2) is joined to an element of a subassembly (5), said subassembly moving with respect to a guide (9) integrated in a fixed element (8), which guide has an opening (10) for its removal, the elements of said subassembly having the capability of relative movement against the action of a spring (6).

2. A pressure regulating valve for a container under pressure according to claim 1 **characterized by** having a groove (11) in the fixed element (8) to which it is linked, said groove (11) being such that it allows raising the sealing element for the depressurization of the container under pressure.

3. A pressure regulating valve for a container under pressure according to claims 1 and 2 **characterized by** having engraved marks (7) in the pressure indicating element which allow visually and simply determining the pressure existing in the container under pressure.

4. A pressure regulating valve for a container under pressure according to claims 1, 2 and 3 **characterized by** the pressure indicating element having grooves (11) in its design allowing the pressure generating fluid to undergo several consecutive adiabatic lamination and expansion processes for its exit to the outside, said outlet duct (3) being closed by the indicating element (2).
